# EUROPEAN PATENT APPLICATION

(11) **EP 3 825 076 A1**
(43) Date of publication of application: **26.05.2021**
(21) Application number: 20206932.4
(22) Date of filing: 11.11.2020
(51) Int. Cl.: B25J 13/00, G05B 19/409

(54) **MACHINE FOR WORKING PANELS WITH REMOTE CONTROL AND METHOD THEREOF**

(30) Priority: 22.11.2019 IT 201900021915
(71) Applicant: SCM Group S.p.A., 47921 Rimini (RN) (IT)
(72) Inventor: GALLO, Gianluca, 47921 RIMINI (IT)
(74) Representative: Tiburzi, Andrea

(57) **Abstract**

The present invention relates to a machine (10) for working panels (P), in particular for working panels (P) made of wood, fiberglass, plastic, and the like, wherein said machine (10) comprises working members (11), for carrying out the working of said panels (P), a display (12), a logic control unit (U) connected to said display, and a control device (13), configured for interacting remotely with said logic control unit (U), wherein said machine (10) is characterized in that said control device (13) has at least one button (130), the interactions between said control device (13) and said logic control unit (U) being programmable and/or vary according to the status of said machine (10). Also, the present invention concerns a method of working panels (P) by means of said machine (10).

## Description

The present invention relates to a machine for working panels, such as for example wooden panels and the like, with remote control of such working, and a relative method.

### Field of the invention

More specifically, the invention relates to a machine for working, in particular for cutting, panels in wood, plastic, metal, glass, fiberglass, ceramic, and the like, comprising a remote control for the remote control of said processing, aimed at making more comfortable and safer the working activities by the operator.

Furthermore, the invention relates to a method for processing such panels.

In the following, the description will be directed to a machine comprising a remote control for the control of the cutting of wooden panels, in which such cuts are performed sequentially according to a predefined scheme, and an operator must move the panel in the positions indicated by this scheme during the times of machine downtime. However, it is clear that the description should not be considered limited to this specific use.

### Prior art

There are known machines for working small dimensions wooden panels and the like, often used in carpentry and small production activities, whose operation is guided by an operator.

These machines generally comprise a work surface for positioning the panels to be processed, generally consisting of a fixed half-plane and a movable half-plane. Between the two half-planes there is a slot, in which a circular blade is inserted. The machine also comprises movable rods and stops, slidingly movable on said rods, for positioning the panel.

When the operator has to cut a panel, he places it on the work surface, positions it by means of the movable rods, and the stops, and moves the movable half-plane, even manually, by sliding the panel towards the circular blade to perform the cut along the required line.

The latest generation machines also include a logic control unit for storing and executing cutting patterns on these panels, so as to optimize the cutting steps, minimizing waste of wood.

These machines also include a viewer or display, by means of which the logic control unit shows the operator the sequence of the various cuts, indicating the position of the rods and stops. To switch from one cutting operation to another, also for safety reasons, the operator generally has to press a button to start the execution of a subsequent cutting operation.

The machine start button is usually placed on the body of the machine near said work surface.

However, the machine start button is not always easily reachable by the operator, since the machines for processing panels generally have remarkable dimensions, if compared to an operator. Furthermore, the panels placed on the work surface can be an obstacle to reaching this button.

In the patent application EP3404635 the use of remote control for the remote control of woodworking machines has been proposed, comprising at least two command buttons, and a communication device for exchanging data at a predetermined frequency. In particular, in the solution described in the aforementioned patent application, this remote control provides a first button for controlling the working steps of the machine and a second button for the safety of the operator, such as for example an emergency stop button of the machine. Furthermore, the data exchange device could be adapted as an additional safety measure for the operator.

However, this prior art remote control was not designed to ensure the comfort use by an operator.

### Scope of the invention

In light of the above, it is, therefore, an object of the present invention to provide a machine comprising a remote control for the remote control of the working of panels and the like, which is simple and intuitive with respect to what already exists in the prior art.

A further object of the present invention is that this remote control has reduced dimensions.

Another object of the present invention is that this remote control can be easily positioned according to the operator's needs.

Finally, the object of the present invention is to provide a method for machining panels that is fast, easy, and intuitive.

### Object of the invention

It is therefore specific object of the present invention a machine for working panels, in particular for working panels made of wood, fiberglass, plastic and the like, wherein said machine comprises working members, for carrying out the working of said panels, a logic control unit, and a control device, configured for interacting remotely with said logic control unit, wherein said machine is characterized in that said control device has at least one button, and in that said machine is configured in such a way that the interactions between said control device and said logic control unit is programmable and/or vary according to the status of said machine. By way of example, when the machine is stopped, by pressing said at least one button, the machine starts processing a panel, while when it is in operation, by pressing said at least one button, the machine stops.

According to the invention, said control device may be a remote control.

Further, according to the invention, said control device may comprise moving means for said at least one button, as a joystick, so that said button can rotate and move along a plurality of directions.

Always, according to the invention, said at least one button may be made of transparent or semi-opaque material with respect to the light radiation and said control device may comprise a multicolored LED, which may be installed inside said button and controlled by said logic control unit.

In particular, according to the invention, said logic control unit may be configured for transmitting a signal relative to the status of said machine and/or of the interaction between said control device and the machine, towards said multicolored LED, for example, lighting up when the machine is turned on/off.

Further, said multicolored LED may be configured for emitting different light radiation according to the status of said machine and/or according to the interaction between said control device and the machine itself.

Further, according to the invention, the statuses of said machine may include in one or more of the following: ready to carry out a new cut and/or working and/or paused, and/or out of work.

As an alternative, according to the invention, said device control may be a programmable device comprising a touchscreen, such as a smartphone or a smartwatch, and said at least one button is a virtual button displayed on said touchscreen.

Further, according to the invention, said machine may comprise a display and in that said logic control unit may be connected to said display and is configured so as to obtain from said panel a plurality of parts, providing a graphic display of said panel broken down into said plurality of parts on said display, and displaying a sequence of operations indicating how to manipulate said panel for working it by said working means.

In addition, according to the invention, said control device may comprise coupling means, wearable by an operator, said coupling means being preferably a cuff or a lanyard.

Always, according to the invention, said machine may comprise blocking and releasing means for said control device, said blocking and releasing means being couplable with said machine. In particular, said machine may comprise at least one element of ferromagnetic material and in that said blocking and releasing means comprises a magnet, installed on said control device, wherein said magnet is removably couplable with said at least one element of ferromagnetic material.

Finally, according to the invention, said control device may have substantially the same dimensions of said button.

It is further object of the present invention a method of working panels, in particular for working panels made of wood, fiberglass, plastic and the like, by a machine according to any one of the preceding claims, characterized by comprising the following step:
A. varying the interaction between said control device and said machine by programming it, and/or according to the status of said machine.

In particular, a method according to the invention may include the following steps:
B. calculating or reading a sequence of operations for dividing a panel into a plurality of parts;
C. transmitting a signal to a display to display a first operation of said sequence of operations; and
A1. receiving from said control device, when said button is operated, so as to transmit a further signal to said display to view an operation of said sequence of operations subsequent to the one displayed on said display in said step C.

### Brief description of the drawings

The present invention will be now described, for illustrative but not limitative purposes, according to its preferred embodiments, with particular reference to the figures of the enclosed drawings, wherein:
figure 1 shows a perspective view of a system according to the present invention comprising a machine for processing panels and a remote control coupled in a detachable manner to said machine;
figure 2 shows a perspective view of a remote control of a system according to the present invention inside a cuff worn by an operator; and
figure 3 shows a perspective view of a remote control of a system according to the present invention attached to a lanyard worn by an operator.

### Detailed description

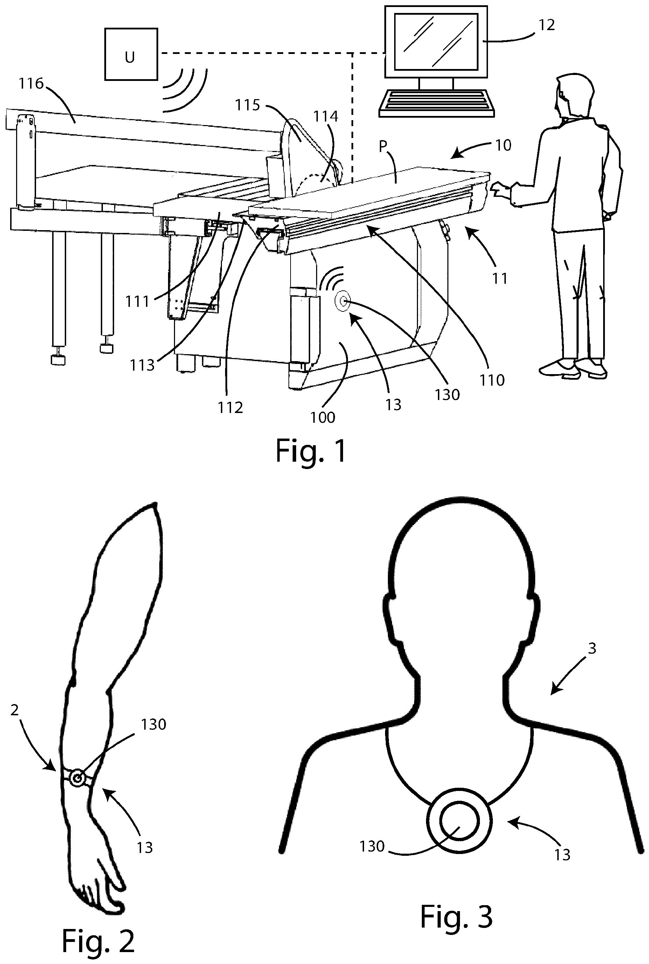

With reference to figures 1 - 3, a machine 10 for processing wooden panels P and the like can be seen, comprising a control device 13, in particular a remote control 13, to remotely control this machine 10.

In particular, the machine 10 comprises a remote control 13 having a single button 130, and which can be moved or worn by an operator in such a way as to facilitate the working of said panels P by said operator.

With reference to figure 1, the machine 10 is a machine 10 for working wooden panels P and the like, which comprises a base 100, working members 11 for processing said panels P, arranged on said base 100, a logic unit control unit U, configured to interact with said remote control 13 and with said working members 11, as described below, and a display.

Said base 100 can be made of ferromagnetic material, the function of which will be better defined below.

Said working members 11 comprise in particular a work surface 110, for supporting the panel P to be cut.

Said work surface 110 comprises, in turn, a fixed half-plane 111 and a movable half-plane 112, movable with respect to said fixed half-plane 111.

A slot 113 is provided between said fixed half-plane 111 and said movable half-plane 112, the function of which will be better defined shortly.

Said working members also comprise a circular blade 114, arranged between said fixed half-plane 111 and said movable half-plane 112 in said slot 113, capable of tilting with respect to the work surface 110.

The line identified between said fixed half-plane 111 and said movable half-plane 112, along which said circular blade is arranged, identifies the cutting line of the machine 10.

Said working members 11 may also comprise one or more movable rods (not shown in the figure), for positioning the panel P before working.

Furthermore, said working members 11 can include one or more stops (not shown in the figure), slidingly coupled on said movable rods and fixable to them, and equipped with transceiving means, which can be operatively connected to said logic control unit U.

In fact, said movable rods and said stops can be configured to position the panel P with respect to the cutting line of said machine 10.

Said machine 10 also comprises protection members, having a hood 115, capable of covering the circular blade 114 even when it is tilted, and a movable arm 116, fixed to said base 100 and having said hood 115 at one end.

The logic control unit U is operatively connected to said display, by means of a suitable cable, and, as said, to said remote control 13. The connection between said logic control unit U and said remote control is of the wireless type, for example, based on an infrared protocol, and the like.

Furthermore, as said, the control logic unit U can be connected to said stops. The connection between said logic control unit U and said stops is preferably of the wireless type, for example, based on Bluetooth® protocol and the like.

In some embodiments, said logic control unit U comprises a processor or processing means, such as a PLC and the like, a bus, to which the processor is connected, memory means, connected to said bus, in which a program can be stored, for programming the processor.

The logic control unit U can therefore be programmed so as to obtain a plurality of parts from said panel P and provide a graphic display of said panel P broken down into said plurality of parts on said display 12, and display a sequence of operations for indicating how to manipulate said panel P to work it by means of said working members 11.

The control device 13, or remote control 13, comprises a single button 130, and coupling means 2, 3 with the operator or with the machine 10, so as to make it particularly simple for an operator to use the remote control 13. However, in alternative embodiments, the control device 13 can also comprise more buttons.

In particular, the button 130 preferably has substantially the same size as the remote control 13. In this way, the dimensions required for the production of this control device 13 are minimized.

Furthermore, the button 130 can be a joystick, so as to be able to send signals to the control logic unit U.

Furthermore, the pushbutton 130 can be made of transparent or semi-opaque material with respect to the light radiation, and can comprise, installed within it, a multicolored LED, the function of which will be better explained later.

The coupling means 2, 3 between the remote control 13 and the operator or the machine 10 can be a cuff 2, also known as a wrist strap 2, a lanyard 3, to wear the remote control 13 on the chest, or magnets which can be coupled to the machine, particularly to the base 100 made of ferromagnetic material.

In an alternative embodiment, said control device 13 can be a programmable device, such as for example a smartwatch or a smartphone. In the latter case, the control device 13 can be a remote control shown on a touchscreen type screen, which can have a single virtual button.

The operation of the machine 10 for processing panels P described above can be as follows.

During the processing of the panel P, the operator must move the panel P on said work surface 101, in such a way that the working members 11 process the panel P, according to a predefined sequence of cuts.

In particular, when the operator has to cut a panel P, he places the latter on the movable half-plane 112 of the work surface 110 and positions it by means of the movable rods and stops according to the instructions shown on the display provided by the control logic unit; and moves, also manually, the movable half-plane 112, making the panel P slide towards the circular blade 114 to perform the cut along the cutting line.

As anticipated, the logic control unit U, before starting the machining of the panel P, can calculate, by executing the program stored in the memory means, the sequence of the cuts to be performed on the panel P, the relevant position, which must assume the rods and stops for each cut, as well as the relative inclination of the circular saw 114 with respect to the work surface 110. Alternatively, this sequence of cuts can be manually inserted into the memory means of the control logic unit U by an operator.

In this way, the logic control unit U can show, on said display 12, each cut of said sequence of cuts, so that the operator performs them correctly.

In particular, once the operator has completed the cut shown on the display 12, by pressing button 130, the logic control unit U displays the next cut in the sequence of cuts. It is therefore particularly advantageous for the remote control 13 to have coupling means 2, 3 with the operator or with the machine, so that it is always easily accessible to the operator, in every processing step of the panel P.

The logic control unit U is in fact configured in such a way that the interaction between the remote control 13 and the machine 10 varies according to the state of the machine 10 itself. By way of example, the control logic unit U can be programmed in such a way that:
- if the button 130 is pressed during the processing of the panel P by the working members 11, the machine 10 stops the working members 11, passing into a standby phase; and/or
- if the button 130 is pressed during the standby phase of the machine 10, the display 12 shows the next working phase, so that the operator can move the panel P according to the instructions shown; and/or
- if the button 130 is pressed a second time during the standby phase of the machine 10, the machine 10 exits from the standby phase and the working members 11 return to be operational; in this case, for safety reasons, the control device 13 can be programmed in such a way as to send to the logic control unit U the signal to resume the working only if operated with a particular sequence, for example by being pressed for a long enough time.

Alternatively, the logic control unit U can be programmed in such a way that its interaction with the remote control 13, the machine 10, and the display 12 depends on different sequences with which the button 130 is pressed, or, in case of the button 130 is a joystick, by the movements performed with this joystick.

Furthermore, the interaction mode between the control device 13 and the logic control unit U can be reprogrammed according to the specific needs of the operator.

Furthermore, the logic control unit U can be configured to transmit a signal relating to the status of the machine 10 to the multicolored LED, and said multicolored LED can be configured to emit a different light radiation depending on the state of the machine 10.

By way of example, the multicolored LED can emit green light if the machine 10 is ready to perform a new cut, or blue if it is running, or yellow if it is paused, or red if it is broken.

Alternatively, in case of the control device 13 has a virtual button 130 shown on a color screen, this virtual button 130 can assume different colors according to the state of the machine 10 directly on the screen.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (10) for working panels (P), in particular for working panels (P) made of wood, fiberglass, plastic, and the like, wherein said machine (10) comprises
working members (11), for carrying out the working of said panels (P),
a logic control unit (U), and
a control device (13), configured for interacting remotely with said logic control unit (U),
wherein said machine (10) is **characterized**
**in that** said control device (13) has at least one button (130), and
**in that** said machine (10) is configured in such a way that the interactions between said control device (13) and said logic control unit (U) are programmable and/or vary according to the status of said machine (10).

2. Machine (10) according to the preceding claim, **characterized in that** said control device (13) comprises moving means for said at least one button (130), as a joystick, so that said button (130) can rotate and move along a plurality of directions.

3. Machine (10) according to any one of the preceding claims, **characterized in that** said at least one button (130) is made of transparent or semi-opaque material with respect to the light radiation, and
**in that** said control device (13) comprises a multicolored LED, installed inside said button (130) and controlled by said logic control unit (U).

4. Machine (10) according to the preceding claim, **characterized in that** said logic control unit (U) is configured for transmitting a signal relative to the status of said machine (10) and/or of the interaction between said control device (13) and the machine (10), towards said multicolored LED.

5. Machine (10) according to the preceding claim, **characterized in that** said multicolored LED is configured for emitting different light radiation according to the status of said machine (10) and/or according to the interaction between said control device (13) and the machine (10).

6. Machine (10) according to any one of claims 4-5, **characterized in that** the statuses of said machine (10) are included in one or more of the following: ready to carry out a new cut and/or working and/or paused, and/or out of work.

7. Machine (10) according to claim 1, **characterized in that** said device control (13) is a programmable device comprising a touchscreen, such as a smartphone or a smartwatch, and said at least one button is a virtual button displayed on said touchscreen.

8. Machine (10) according to any one of the preceding claims, **characterized in that** said machine comprises a display (12) and **in that** said logic control unit (U) is connected to said display and is configured so as
to obtain from said panel (P) a plurality of parts,
providing a graphic display of said panel (P) broken down into said plurality of parts on said display (12), and
displaying a sequence of operations indicating how to manipulate said panel (P) for working it by said working means (11).

9. Machine (10) according to any one of the preceding claims, **characterized in that** said control device (13) comprises coupling means (2, 3), wearable by an operator, said coupling means (2, 3) being preferably a cuff (2) or a lanyard (3).

10. Machine (10) according to any one of the preceding claims, **characterized by** comprising blocking and releasing means for said control device (13), said blocking and releasing means being couplable with said machine (10).

11. Machine (10) according to the preceding claim, **characterized in that** it comprises at least one element of ferromagnetic material and **in that** said blocking and releasing means comprises a magnet, installed on said control device (13), wherein said magnet is removably couplable with said at least one element of ferromagnetic material.

12. Machine (10) according to any one of the preceding claims, **characterized in that** said control device (13) has substantially the same dimensions of said button (130).

13. Method for working panels (P), in particular for working panels (P) made of wood, fiberglass, plastic, and the like, by a machine (10) according to any one of the preceding claims, **characterized by** comprising the following step:
A. varying the interaction between said control device (13) and said machine (10) by programming it, and/or according to the status of said machine (10).
